# EUROPÄISCHE PATENTANMELDUNG

(11) **EP 4 563 321 A1**
(43) Veröffentlichungstag der Anmeldung: **04.06.2025**
(21) Anmeldenummer: 23212866.0
(22) Anmeldetag: 29.11.2023
(51) Int. Cl.: B29C 48/156, B29C 48/34, G09F 3/20

(54) **VERBUNDSCHIENE SOWIE VERFAHREN UND VORRICHTUNG ZU IHRER HERSTELLUNG**

(71) Anmelder: Invictus Cable GmbH, 7011 Siegendorf (AT)
(72) Erfinder: Reiter, Bernd, 7323 Ritzing (AT); Reissner, Thomas, 7323 Ritzing (AT)
(74) Vertreter: Patentanwälte Barger, Piso & Partner

(57) **Zusammenfassung**

Verbundschiene (4), bei der wenigstens eine Metallbahn (5) in einem Kunststoffsubstrat (2) eingebettet ist und aus diesem einseitig herausragt, sowie Verfahren und Vorrichtung zu ihrer Herstellung. Zur Reduzierung des Material- und Kostenaufwandes weist die Metallbahn (5) ein U-Profil auf, dessen Kuppe aus dem Kunststoffsubstrat (2) herausragt.

Zur Herstellung der Verbundschiene wird ein flaches Metallband vor Zuführung in einen Extrusionskopf zu einer Metallbahn mit U-Profil umgeformt und sodann in diesem mit vorstehender Kuppe in dem Kunststoffsubstrat eingebettet.

Zur Durchführung des Verfahrens dient eine Vorrichtung mit einem Extrusionskopf, dem ein Umformungswerkzeug mit eingangsseitigem Flachprofil und ausgangsseitigem U-Profil vorangestellt ist.

## Beschreibung

Die Erfindung bezieht sich auf eine Verbundschiene, bei der wenigstens eine Metallbahn in einem Kunststoffsubstrat eingebettet ist und aus diesem einseitig herausragt, sowie auf eine Vorrichtung und ein Verfahren zu deren Herstellung.

Verbundschienen mit mehreren (meist drei) einseitig vorstehenden Metallbahnen sind seit einiger Zeit bekannt, und zwar hauptsächlich im Bereich Logistik als Leisten für Lagerregale, an denen ansteuerbare Positionsetiketten für Lagergüter angeklickt werden können. Bei den derzeit in Verwendung stehenden Verbundschienen bestehen die einseitig vorstehenden Metallbahnen aus Kupfer- oder Messingdrähten mit Kreisquerschnitt und das Kunststoffsubstrat aus PVC. Diese Ausgestaltung hat sich aber aus hauptsächlich zwei Gründen als mit Nachteilen behaftet erwiesen. Die Haftung des im Kunststoffsubstrat eingebetteten Teils des Kreisprofils reicht nämlich bei Verwerfungen, Biegungen oder Krümmungen der Verbundschiene oft nicht aus, sodass sich die Metallbahn vom Kunststoffsubstrat ablöst. Der volle Kreisquerschnitt bedingt zudem einen unnötig hohen Material-, Gewichts- und Kostenaufwand, denn für eine Signalübertragung ist nur die Außenhaut der Metallbahn von Bedeutung.

Ziel der Erfindung ist daher die Bereitstellung einer Verbundschiene mit minimalstem Material- und Kostenaufwand und guter Haftung der Metallbahn im Kunststoffsubstrat sowie eines zugehörigen Verfahrens und einer Vorrichtung zu deren Herstellung.

Dieses Ziel wird mit einer Verbundschiene der eingangs genannten Art erfindungsgemäß dadurch erreicht, dass die Metallbahn ein U-Profil aufweist, dessen Kuppe aus dem Kunststoffsubstrat vorsteht.

Durch das U-Profil der Metallbahn wird gegenüber dem bekannten Vollkreisprofil eine enorme Material-, Gewichts- und Kosteneinsparung erzielt. Das im Kunststoffsubstrat eingebettete U-Profil weist gegenüber dem Vollkreisprofil etwa die doppelte Berührungsfläche auf, weil beide Seiten des "U" - ausgenommen die Kuppe - mit dem Kunststoffsubstrat in Verbindung stehen, wogegen bei einem Vollkreisprofil der Metallbahn nur der äußere eingebettete Umfang vom Kunststoffsubstrat bedeckt ist. Die Haftung der erfindungsgemäßen Metallbahn im Kunststoffsubstrat ist daher gegenüber der herkömmlichen Metallbahn mit Kreisprofil wesentlich verbessert, was sich sowohl bei der Verarbeitung als auch bei der Lagerung in Form von Wickeln und auch beim bestimmungsgemäßen Einsatz in Lagerregalen als vorteilhaft erweist.

Bei der Herstellung von Verbundschienen mit wenigstens einer in ein Kunststoffsubstrat eingebetteten, allenfalls teilweise herausragenden Metallbahn wird ein Metallstrang gemeinsam mit Kunststoffgranulat einem Extrusionskopf zugeführt, aus dem die Verbundschiene austritt.

Ein derartiger Extrusionskopf (und das mit ihm durchführbare Verfahren) ist beispielsweise in der EP 1 758 724 B1 beschrieben.

Zur Herstellung der erfindungsgemäßen Verbundschiene wird im Einklang mit der Erfindung als Metallstrang ein flaches Metallband gewählt, vor Zuführung in den Extrusionskopf zu einer Metallbahn mit U-Profil umgeformt und sodann in diesem mit vorstehender Kuppe in dem Kunststoffsubstrat eingebettet.

Der Vorteil dieses Verfahrens liegt darin, dass herkömmlich zur Verfügung stehende flache Metallbänder als Ausgangsmaterial verwendet werden können und die Verbundschiene somit ein einem einzigen Durchgang herstellbar ist.

Die Vorrichtung zur Durchführung des erfindungsgemäßen Verfahrens weist einen Extrusionskopf mit einer Zuführung für Kunststoffgranulat und einer Zuführung für einen Metallstrang auf. Im Einklang mit der Erfindung ist dem Extrusionskopf ein Umformwerkzeug mit eingangsseitigem Flachprofil und ausgangsseitigem U-Profil vorangestellt. Auf diese Weise wird gewährleistet, dass die erfindungsgemäße Verbundschiene in einem einzigen Durchgang, also ohne separate Fertigungsschritte, hergestellt werden kann.

Die Erfindung wird im Folgenden anhand eines in der Zeichnung dargestellten Anführungsbeispiels näher erläutert. Es zeigen Fig. 1 einen Querschnitt durch eine Verbundschiene gemäß dem Stand der Technik, Fig. 2 einen analogen Querschnitt durch eine erfindungsgemäße Verbundschiene und Fig. 3 das Schema einer Herstellungsanlage für eine erfindungsgemäße Verbundschiene.

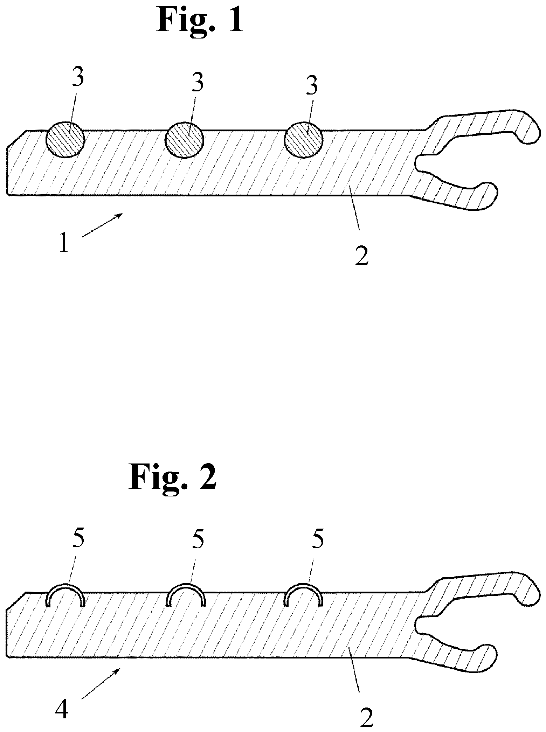

Aus Fig. 1 ist eine herkömmliche Verbundschiene 1 ersichtlich, die zum Beispiel als Leiste für Lageregale Verwendung finden kann. In einem Kunststoffsubstrat 2, zum Beispiel aus PVC, sind zum Beispiel drei Metallbahnen 3 aus zum Beispiel Rundkupfer mit zum Beispiel 1 mm² Querschnitt eingebettet, die einseitig aus dem Kunststoffsubstrat vorstehen.

Fig. 2 zeigt dagegen einen analogen Querschnitt der erfindungsgemäßen Verbundschiene 4. Im Kunststoffsubstrat 2 sind statt der Metallbahnen 3 aus Rundkupfer Metallbahnen 5 aus U-förmig gebogenem Flachkupfer, zum Beispiel mit den Abmessungen 2 mm x 0,1 mm, also mit einem Querschnitt von bloß 0,2 mm², eingebettet, die mit der Kuppe des U-Profils nach außen abstehen.

Funktionell (hinsichtlich der elektrischen Kontaktierung) sind die Verbundschienen 1 und 4 somit gleich, doch hat die erfindungsgemäße Verbundschiene den Vorteil des geringeren Gewichtes, des geringeren Kupferbedarfs, der geringeren Kosten und der besseren Haftung der Metallbahnen 5 im Kunststoffsubstrat 2 im Falle von Krümmungen, Verbiegungen etc. der Verbundschiene 4.

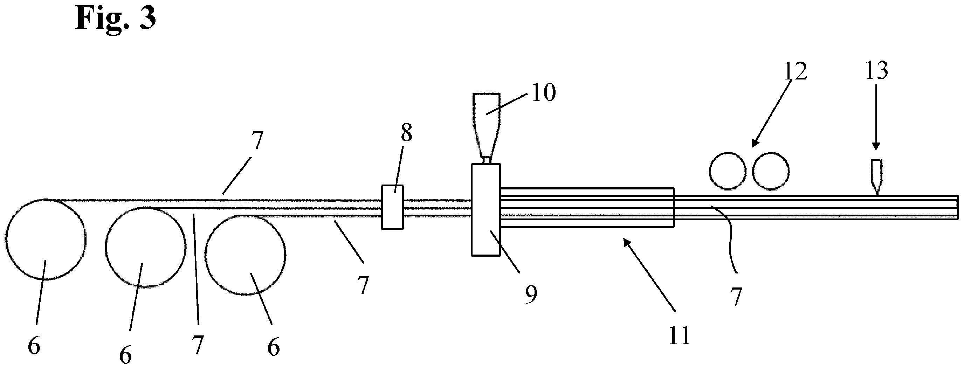

Fig. 3 veranschaulicht schematisch eine Herstellungsanlage für eine erfindungsgemäße Verbundschiene 4. Von zum Beispiel drei Trommeln 6 werden drei flache Metallbänder 7, zum Beispiel mit den Abmessungen 2 mm x 0,1 mm, abgespult und durchlaufen ein Umformungswerkzeug 8, das eingangsseitig ein Flachprofil, ausgangsseitig ein U-Profil aufweist. Das Umformwerkzeug 8 ist einem Extrusionskopf 9 mit einer Zufuhr 10 von Kunststoffgranulat vorangestellt. Nach dem Austritt der Verbundschiene 4 aus dem Extrusionskopf (9) können eine Wasserkühlung 11, Bürsten 12 und eine Ablängstanze 13 vorgesehen sein.

Da erfindungsgemäß die Materialstärke der Metallbahn wesentlich geringer als jene einer vergleichbaren, herkömmlichen Metallbahn ist, zum Beispiel 0,2 mm² statt 1,0 mm² Querschnitt, kann die Verbundschiene 4 mit höherer Austrittsgeschwindigkeit aus der Herstellungsanlage produziert werden, als die Verbundschiene 1 gemäß dem Stand der Technik. Die erfindungsgemäße Verbundschiene 4 kann mit einer Geschwindigkeit von 30 m/min hergestellt werden, wogegen eine herkömmliche, vergleichbare Verbundschiene 1 nur mit 8 m/min der Anlage entnommen werden kann.

## Patentansprüche

1. Verbundschiene (4), bei der wenigstens eine Metallbahn (5) in einem Kunststoffsubstrat (2) eingebettet ist und aus diesem einseitig herausragt, **dadurch gekennzeichnet, dass** die Metallbahn (5) ein U-Profil aufweist, dessen Kuppe aus dem Kunststoffsubstrat (2) vorsteht.

2. Verfahren zur Herstellung einer Verbundschiene, gemäß Anspruch 1, bei dem ein Metallstrang gemeinsam mit Kunststoffgranulat einem Extrusionskopf (9) zugeführt und die Verbundschiene (4) aus diesem extrudiert wird, **dadurch gekennzeichnet, dass** als Metallstrang ein flaches Metallband (7) vor Zuführung in den Extrusionskopf (9) zu einer Metallbahn (5) mit U-Profil umgeformt und sodann in diesem mit vorstehender Kuppe in dem Kunststoffsubstrat (2) eingebettet wird.

3. Vorrichtung zur Durchführung des Verfahrens nach Anspruch 2, welche einen Extrusionskopf mit einer Zuführung für Kunststoffgranulat und einer Zuführung für einen Metallstrang aufweist, **dadurch gekennzeichnet, dass** dem Extrusionskopf (9) ein Umformwerkzeug (8) mit eingangsseitigem Flachprofil und ausgangseitigem U-Profil vorangestellt ist.
